# EUROPEAN PATENT SPECIFICATION

(11) **EP 1 364 606 B1**
(45) Date of publication and mention of the grant of the patent: **28.12.2005**
(21) Application number: 03010959.9
(22) Date of filing: 16.05.2003
(51) Int. Cl.: A47J 37/08, A21B 1/00, A21B 3/07

(54) **Oven for cooking a food product such as pizza or similar**
Ofen zum Garen von Gargut wie Pizza oder dergleichen
Four pour cuire des aliments tels que pizza ou produit similaire

(30) Priority: 20.05.2002 IT UD20020108
(43) Date of publication of application: 26.11.2003
(73) Proprietor: Moretti Forni S.p.A., 61035 Marotta di Mondolfo PU (IT)
(72) Inventor: Pacenza, Sergio, 33170 Pordenone (IT); Pacini, Mario, 33170 Pordenone (IT)
(74) Representative: Gustorf, Gerhard

(56) References cited:
- EP-A- 1 107 199
- US-A- 4 964 392
- US-A- 4 986 174
- US-A- 5 686 004
- US-A- 6 080 963

## Description

The present invention refers to an oven, advantageously, but not only, of the electrical type, for cooking a food product, such as pizza or similar, comprising a cooking chamber, inside which, through a first opening, a food product, or a series of food products can be inserted, at a time. The cooking chamber also features a second opening, through which the food product is automatically ejected after cooking by means of ejection, which can be arranged both inside or outside the cooking chamber.

### STATE OF THE ART

An oven is known for cooking pizzas, flat breads and similar, comprising a cooking chamber, inside which one or more pizzas at a time are cooked. The cooking chamber features a single front opening through which the pizzas are introduced in succession to be cooked. Afterwards, the oven is temporarily opened both to move, by means of a peel or similar implement, the pizzas already placed in the oven, so as to make cooking more uniform, or to introduce other pizzas.

Similarly, when cooking has terminated, the oven is again opened and each already-cooked pizza is taken out of the cooking chamber.

A first drawback of the known type of oven is represented by the fact that, for each pizza, the front opening of the cooking chamber has to be often opened, for loading, moving the pizzas and taking these out after cooking.

The continuous opening of the cooking chamber causes strong heat dispersion from the oven and requires ongoing energy input for restoring a suitable cooking temperature.

Another drawback consists in the fact that, to grip and move each pizza inside the cooking chamber, this has to be lifted slightly using a peel. Consequently, a sufficiently high cooking chamber is required in order to lift and move each pizza easily. Normally, in the case of professional electric ovens, not for home use, the height of the known cooking chambers is about 14-16 cm, so the overall volume of the cooking chamber is very large and negatively affects the relevant quantity of heat needed for heating. Document US-6080963 discloses the preamble of claim 1.

The Applicant, to overcome such drawbacks relating to the known state of the art and obtain further advantages, has designed and manufactured this invention.

### SUMMARY OF THE INVENTION

This invention is expressly and essentially characterised in the main claim.

Other novel characteristics of the invention are expressed in the secondary claims.

The aim of the invention is to manufacture an oven for cooking a food product, such as pizza or similar, comprising a cooking chamber of relatively reduced dimensions, and by means of which a food product can be cooked using a limited amount of heat and a minimum amount of electricity.

According to this aim an oven according to this invention features a cooking chamber, having two openings. Specifically through a first opening, which can be selectively closed by means of first means of closing, the food product can be inserted inside the cooking chamber, while through a second opening, which can be selectively closed by means of second means of closing, the food product can be ejected.

Furthermore means of ejection are provided for automatically ejecting the food product through the second opening. Specifically, such means of ejection are arranged in the cooking chamber.

The food product can therefore be introduced into and ejected from the cooking chamber through two distinct openings. Furthermore it can be ejected from the cooking chamber through the second opening, only at the time of ejection, to thereby free the cooking chamber for the next load.

The cooking chamber has a box shape and the two openings are made on two distinct walls of the cooking chamber, so as to permit loading the food product from one side, and then ejecting the food product from the lateral side.

The above means of ejection comprise a pushing element, such as a bar able to slide along a cooktop of the chamber, to push the food product towards the second opening, until this is ejected.

In a preferential embodiment, the means of ejection are linked to a kinematic mechanism, driven automatically for instance by means of an electric motor. Such kinematic mechanism is also linked to the above second means of closing of the second opening, which comprise, for instance, a closing door. This way, the above kinematic mechanism, when the food product has to be removed from the oven, triggers the means of ejection with a single movement and opens the closing door of the second opening, until all the product has been removed.

In an embodiment of this invention, the electric motor is controlled by an electronic control unit, which operates according to the temperature inside the cooking chamber and features a programmable timer. This way ejection of the food product can be programmed to occur after a pre-determined time from introduction of the food product into the cooking chamber and/or according to cooking temperature.

Another aim of this invention is to obtain an appliance by means of which to cook a high number of food products with low heat consumption.

In accordance with such aim, an oven according to this invention is of the modular type, has a substantially box shape and is suitable for being associated with other modular ovens to define a cooking appliance for a high overall number of food products. In this case, each oven is suitable for loading independently with a single food product, or with a defined series of food products at a time, with suitably selected times and temperatures, so that each cooking chamber is only opened for the introduction and ejection of the corresponding food product.

### DESCRIPTION OF THE DRAWINGS

These and other characteristics of this invention will appear clear from the following description of a preferential form of embodiment, provided by way of example, not limitative, with reference to the attached drawings where:
- Fig. 1 is a perspective view of an oven according to this invention;
- Fig. 2 is a front view of an appliance comprising three ovens of fig. 1, arranged one above the other;
- Fig. 3 is a front view of a variation of the appliance in fig.2;
- Fig. 4 is a front view of a part of the inside of the oven in fig. 1 in food product loading condition;
- Fig. 5 is a front view of a part of the inside of the oven in fig. 1 in a first intermediate position;
- Fig. 6 is a front view of a part of the inside of the oven in fig. 1 in a second intermediate position;
- Fig. 7 is a front view of a part of the inside of the oven in fig. 1 in food product ejection condition;
- Fig. 8 is a section view along line A-A of the oven in fig. 5.

### DESCRIPTION OF A FORM OF PREFERENTIAL EMBODIMENT OF THE INVENTION

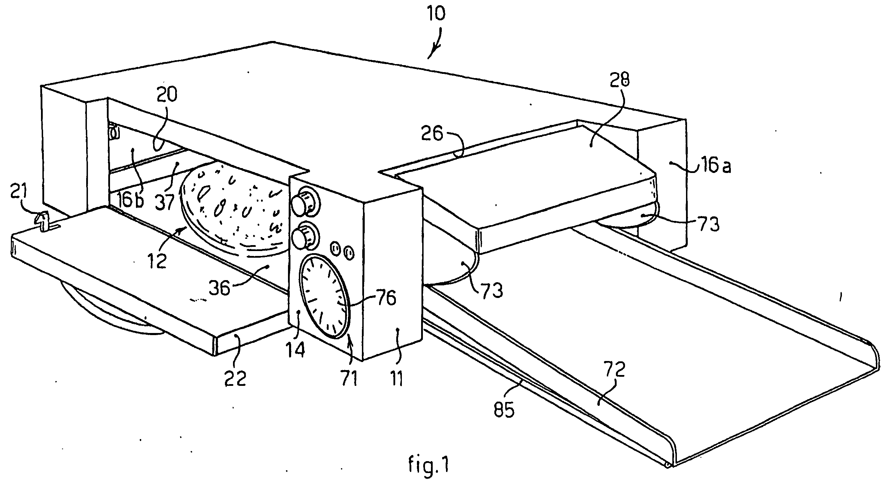

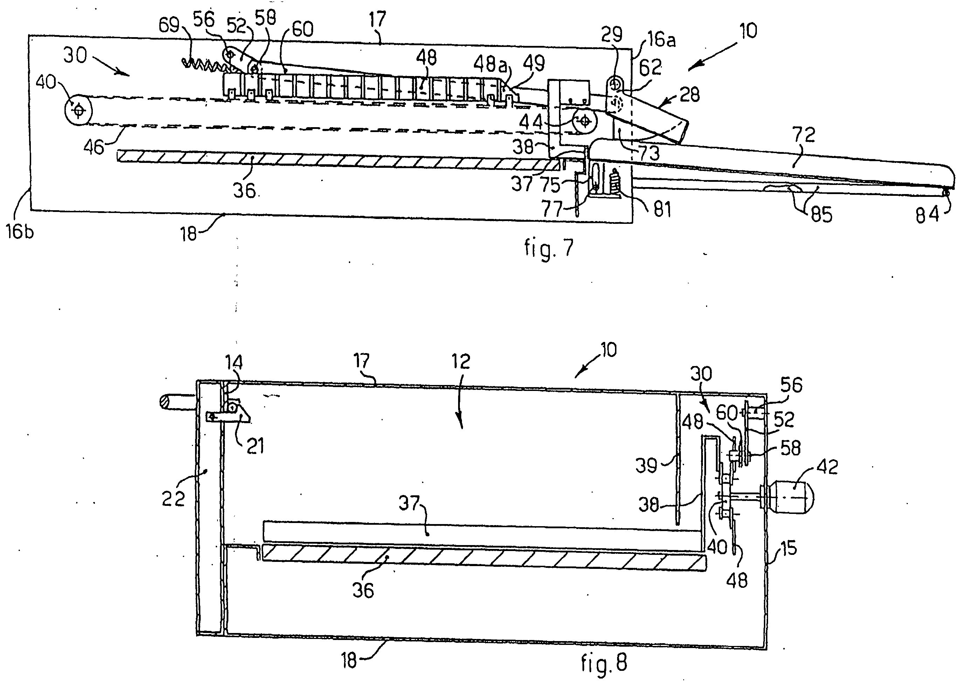

With reference to figure 1, in an oven 10, according to this invention, for cooking a food product such as pizza or else, comprising a structure 11 with a substantially box shape, inside which a cooking chamber 12 is obtained, defined by a front wall 14, a rear wall 15 (fig. 8), a first side wall 16a and a second side wall 16b, an upper wall 17, and a bottom wall 18.

In the front wall 14 a front opening 20 is obtained for loading the pizza and suitable for being selectively opened or closed by means of a first door 22, with manual or automatic operation. With door 22 is associated a locking mechanism 21, which can be selectively operated, to keep door 22 locked during pizza cooking, as described in greater detail below.

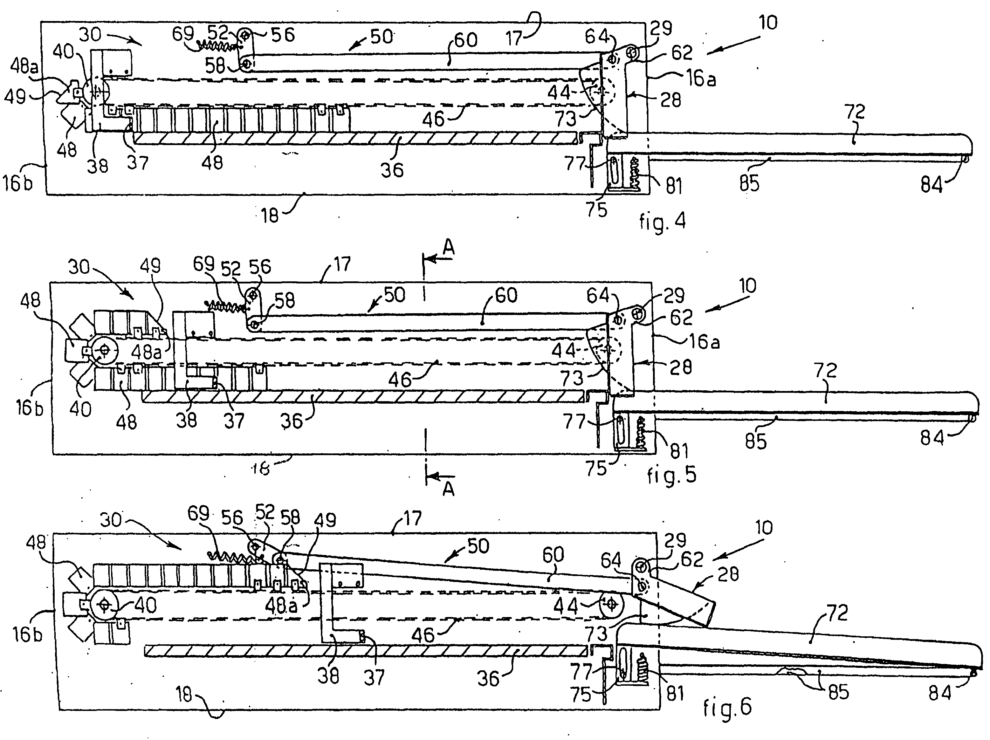

In one of the side walls, for example that on the right 16a, substantially at right angles to the front wall 14, a side opening 26 is obtained, for taking the pizza out of the oven and able to be selectively opened or closed, by means of a second door 28. The latter is hinged at the top to the side wall 16a by means of pins 29, only one of which can be seen in figures 4, 5 and 6 and is connected to an opening mechanism 50, placed inside the oven 10 and described in detail below.

Inside the cooking chamber 12 is a fixed cooktop 36 (figures 4-7), which is substantially parallel to the base wall 18, and on which the pizza can be placed at the time of loading.

Moreover, according to a characteristic of this invention, inside the cooking chamber 12 automatic pizza ejection means are fitted, comprising a horizontal bar 37 positioned parallel to the side opening 26.

The bar 37 is connected, by means of a support 38, to a kinematic mechanism 30, positioned close to the rear wall 15 and separated from the cooking chamber 12 by a vertical partition wall 39 (fig. 8).

The kinematic mechanism 30 comprises a pair of gears 40, 44 (figures 4, 5, 6 and 7) between which a chain 46 is stretched. The gear 40 is a driving gear and is connected to an electric motor 42 (fig. 8), of the bidirectional type, positioned near the side wall 16b. The gear 44 is idle and is fitted near the side wall 16a.

In particular, the bar 37 is fastened to the chain 46 to be moved by the latter on the cooktop 36, in reciprocally opposite directions, between a first loading position, in which the bar is completely moved to the left, (fig. 4), to introduce the pizza onto the cooktop 36, and an ejection position, where the bar 37 is completely moved to the right, near the side opening 26, (fig. 7), and vice versa.

On some links of the chain 46, especially on those to the left of the link to which the bar 37 is fastened, corresponding metal fins 48 are fastened, substantially rectangular in shape, and with relevant overlapping side parts.

A first fin 48a, placed closer to the bar 37 than the others, features a sloped side edge 49, able to cooperate with a peg 58 of the opening mechanism 50.

In particular, the opening mechanism 50 comprises a lever 52 hinged on a pin 56 to the rear wall 15 (fig. 7) and connected, by means of a peg 58, to a drive transmission rod 60 which, in turn, is connected to a peg 64 of a fin 62 of door 28.

The opening mechanism 50 is thus suitable for moving between an idle position (figures 4 and 5), when the pizza is loaded, and the second door 28 is closed, and an operating condition, when the pizza has to be ejected from the oven 10 (figures 6 and 7).

The lever 52 is normally retained by a spring 69 in idle or loading condition (figures 4 and 5), during which the front door 22 can be opened to introduce the pizza, and the second door 28 is closed.

According to another characteristic of this invention, the movement of the kinematic mechanism 30 determines a further movement of an outer tray 72, on which the pizza coming from the cooking chamber 12 can be placed. The outer tray 72 is in fact suitable for cooperating with two cam profiles 73 fastened to the sides of the second door 28.

In this specific case, the outer tray 72, on one side, is hinged on a pin 84, fitted on the ends of a pair of rods 85 integral with the structure 11, and, on the opposite side, is fastened to the side wall 16a, by means of two vertical coupled slots 75, with two fixed joined pegs 77, integral with structure 11.

Two springs 81, only one of which is represented in the drawings, are connected to the outer tray 72, to move this automatically to a sloped position. The cam profiles 73 are on the other hand made to cooperate with the outer tray 72, to define a first horizontal position of the latter, against the action of the springs 81 (fig. 4).

Furthermore, in its sloped position, the outer tray 72 is substantially aligned with the inner table 36 of the cooking chamber 12, so as to permit easy pizza exit.

The oven 10 also comprises an electronic unit 71, of known type, featuring a programmable timer 76, and connected to the electric motor 42. By means of such electronic unit 71 the cooking time of the pizza or of any other food product can be set, so that, after cooking, bar 37 automatically ejects the pizza from the oven 10.

Operation of oven 10, as described so far, is the following.

The idle position of bar 37 is arranged in loading position, close to the side wall 16b, so as not to hinder introduction of the pizza into the cooking chamber 12, and the two doors 22 and 28 are closed.

A pizza to be cooked in the cooking chamber 12 is introduced through the front opening 20, after opening the first door 22. The latter is immediately closed again by the electronic unit 71 and the timer 76 is engaged.

Such engagement also triggers the lock mechanism 21 (figures 1 and 8), that keeps the first door 22 closed, until after the pizza has been cooked and automatically ejected through side opening 26.

After a preset period of time from engagement of the electronic unit 71, the motor 42 turns chain 46 clockwise (figures 4-7) and this moves bar 37 towards the second door 28, which at the same time is opened by opening mechanism 50. More specifically, opening of the second door 28 begins when the first fin 48a is moved up against peg 58, and remains as long as the latter cooperates with the top part of the metal fins 48.

When door 28 is fully open, the relevant cam profiles 73 are in a substantially horizontal position and permit springs 81 to move the outer tray 72 to sloped position. This way, the pizza, though no longer pushed by bar 37, fully exits from the chamber 12, by force of gravity.

Once the pizza has fully exited from the cooking chamber 12, the electric motor 42 reverses movement and returns the chain 46, and the elements associated with this, meaning bar 37 and metal fins 48, to idle position.

Only when the side opening 26 is closed again can the first door 22 be opened again for loading a new pizza.

The locking mechanism 21 can be disengaged manually, or automatically, at the end of cycle, meaning when motor 42 has returned the bar 37 to idle position.

According to a characteristic of this invention thanks to kinematic mechanism 30 the product to be cooked can be moved or removed sideways by means of, for example, standard peels without having to lift it. This way the height of the cooking chamber can be reduced up to 10-11 cm, compared to the 14-16 cm of a cooking chamber 12 of known type of professional non-domestic ovens, thus also reducing the quantity of electricity needed to heat the cooking chamber 12.

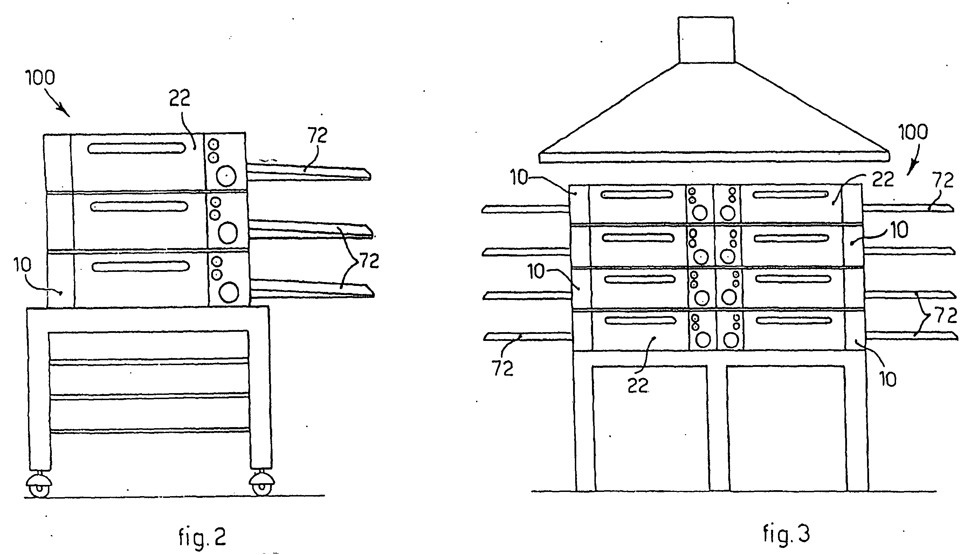

Furthermore, according to another characteristic of this invention, the oven 10 is of the modular type and can therefore be stacked as required above another oven 10, until an appliance 100 is obtained (figures 2 and 3) comprising numerous chambers 12 for the simultaneous cooking of several food products.

For example, in the event of all the products to be cooked requiring the same operating conditions, by suitably programming each electronic unit 71, the times and temperatures can be optimised of ovens 10, without wasting time for loading and avoiding any heat dispersion.

It is nevertheless clear that to the oven 10 described herein, changes and/or additions of parts can be made, without because of this going outside the scope of this invention, as defined by the appended claims.

It is also clear that, although this invention has been described with reference to specific examples, a person skilled in the art can undoubtedly create many other equivalent forms of ovens for cooking a food product, all of which falling within the scope of this invention, as defined by the appended claims.

## Claims

1. Oven for cooking a food product such as pizza or similar, comprising at least one cooking chamber (12) featuring at least one first opening (20), selectively closable by means of first closing means (22) and through which said food product can be inserted into said cooking chamber (12), which also features a second opening (26), selectively closable by means of second closing means (28) and through which said food product can be ejected, **characterised by** the fact that said cooking chamber (12) has a substantially box shape and includes a front wall (14), in which is obtained said first opening (20), and at least a side wall (16a) substantially at right angles to said front wall (14) and in which said second opening (26) is obtained, and by the fact that automatic ejection means are provided in said cooking chamber (12) which include a pushing element formed by a horizontal bar (37) substantially arranged parallel to said second opening (26) for automatically ejecting said food product through said second opening (26), wherein said bar (37) is able to move in a direction substantially perpendicular to said side wall (16a) between a loading position and an ejection position of said food product.

2. Oven as in claim 1, **characterised by** the fact that in said loading position said means of ejection (37) are arranged close to another side wall (16b) of said cooking chamber (12), opposite said first side wall (16a), so as not to interfere with said first opening (20), and that in said ejection position said means of ejection (37) are arranged near said first side wall (16a).

3. Oven as in claim 1 or 2, **characterised by** the fact that said means of ejection (37) are linked to a kinematic mechanism (30) arranged inside said cooking chamber (12) near a rear wall (15) opposite to said front wall (14).

4. Oven as in claim 3, **characterised by** the fact that said kinematic mechanism (30) comprises a pair of gears (40, 44), between which is stretched a chain (46), to which are linked said means of ejection (37) and that one of said gears (40) is linked to an electric motor (42).

5. Oven as in claim 4, **characterised by** the fact that said electric motor (42) is of the bidirectional type and that said chain (46) is able to move said means of ejection (37) to enable these to run in reciprocally opposite directions on a substantially horizontal cooktop (36) of said cooking chamber (12) between said loading position and said ejection position, and vice versa.

6. Oven as in claim 4 or 5, **characterised by** the fact that to the links of said chain (46) is associated a series of fins (48), able to cooperate with an opening mechanism (50) of said second means of closing (28).

7. Oven as in claim 6, **characterised by** the fact that said second means of closing comprise a door (28) and that said opening mechanism (50) comprises a rod (60), connected to said door (28) and able to cooperate with said fins (48), to open said door (28), when said means of ejection (37) are about to eject said food product from said cooking chamber (12).

8. Oven as in claim 7, **characterised by** the fact that a tray (72) is arranged outside said first side wall (16a) and in line with said second opening (26), to accommodate said food product exiting from said cooking chamber (12).

9. Oven as in claim 8, **characterised by** the fact that said tray (72) is able to move between a first substantially horizontal position and a second sloped position, to favour the ejection of said food product, and that said door (28) comprises two cam profiles (73), able to cooperate with said tray (72) to move this from said first position to said second position, when said door (28) is opened by said opening mechanism (50), elastic means (81) being provided to keep said tray (72) in said second position.

10. Oven as in any of claims 4 to 9, **characterised by** the fact that said electric motor (42) is controlled by an electronic unit (71) that controls the temperature inside said cooking chamber (12), which features a programmable timer (76), so that said ejection operation of said food product is programmable, for being performed after a pre-set time from the introduction of said food product into said cooking chamber (12).

11. Oven as in claim 10, **characterised by** the fact that said first closing means (22) are associated with a locking device (21) able to be operated manually and/or automatically from said electronic unit (71), to be selectively disengaged only when said means of ejection (37) are in said loading position of said food product.

12. Equipment for cooking food products, such as pizza or similar, **characterised by** the fact that it comprises at least two modular ovens (10) with box shape as in any one of the preceding claims, and coupled one above the other.

## Patentansprüche

1. Ofen zum Garen eines Lebensmittels, beispielsweise Pizza oder dergleichen, umfassend wenigstens einen Garraum (12) mit wenigstens einer ersten Öffnung (20), die über ein erstes Schließorgan (22) geschlossen und durch die das Lebensmittel in den Garraum (12) eingeführt werden kann, sowie mit wenigstens einer zweiten Öffnung (26), die über ein zweites Schließorgan (28) geschlossen und durch die das Lebensmittel ausgegeben werden kann, **dadurch gekennzeichnet, daß** der Garraum (12) im wesentlichen kastenförmig ausgebildet ist und eine Frontwand (14) mit der darin angeordneten ersten Öffnung (20) sowie wenigstens eine Seitenwand (16a) hat, die im wesentlichen rechtwinklig zu der Frontwand (14) verläuft und in der die zweite Öffnung (26) ausgebildet ist, und daß in dem Garraum (12) ein automatisches Auswerferorgan angeordnet ist, das ein Ausstoßelement in Form einer horizontalen Stange (37) aufweist, die im wesentlichen parallel zu der zweiten Öffnung (26) ausgerichtet ist und dazu dient, das Lebensmittel durch die zweite Öffnung (26) automatisch auszuschieben, wobei die Stange (37) im wesentlichen rechtwinklig zur Seitenwand (16a) zwischen einer Beladeposition und einer Ausschubstellung für das Lebensmittel verschiebbar ist.

2. Ofen nach Anspruch 1, **dadurch gekennzeichnet, daß** das Auswerferorgan (37) in der Beladeposition in der Nähe einer weiteren Seitenwand (16b) angeordnet ist, die der ersten Seitenwand (16a) gegenüberliegt, so daß die erste Öffnung (20) freigehalten wird, und daß sich das Auswerferorgan (37) in der Ausschubstellung in der Nähe der ersten Seitenwand (16a) befindet.

3. Ofen nach Anspruch 1 oder 2, **dadurch gekennzeichnet, daß** das Auswerferorgan (37) mit einem Kinematikgetriebe (30) verbunden ist, das innerhalb des Garraumes (12) in der Nähe einer der Frontwand (14) gegenüberliegenden Rückwand (15) angeordnet ist.

4. Ofen nach Anspruch 3, **dadurch gekennzeichnet, daß** das Kinematikgetriebe (30) zwei Zahnräder (40, 44) aufweist, über welche eine Kette (46) läuft, mit der das Auswerferorgan (37) verbunden ist, wobei eines der Zahnräder (40) mit einem Elektromotor (42) verbunden ist.

5. Ofen nach Anspruch 4, **dadurch gekennzeichnet, daß** der Elektromotor (42) in beiden Drehrichtungen antreibbar ist und daß die Kette (46) das Auswerferorgan (37) so bewegt, daß dieses auf einer im wesentlichen horizontalen Garmachungsebene (36) des Garraumes (12) zwischen der Beladeposition und der Ausschubstellung und zurück in beiden Richtungen verschiebbar ist.

6. Ofen nach Anspruch 4 oder 5, **dadurch gekennzeichnet, daß** an den Gliedern der Kette (46) eine Reihe von Flügeln (48) angebracht ist, die mit einem Öffnungsmechanismus (50) des zweiten Schließorgans (28) zusammenwirken.

7. Ofen nach Anspruch 6, **dadurch gekennzeichnet, daß** das zweite Schließorgan eine Tür (28) ist und daß der Öffnungsmechanismus (50) eine Stange (60) hat, die mit der Tür (28) verbunden ist und mit den Flügeln (28) in Eingriff kommen kann, um die Tür (28) zu öffnen, wenn sich das Auswerferorgan (37) in der Stellung befindet, in der es bereit ist, das Lebensmittel aus dem Garraum (12) auszuschieben.

8. Ofen nach Anspruch 7, **dadurch gekennzeichnet, daß** im Bereich der zweiten Öffnung (26) außerhalb der ersten Seitenwand (16a) eine Schale (72) angebracht ist, die das aus dem Garraum (12) ausgeschobene Lebensmittel aufnimmt.

9. Ofen nach Anspruch 8, **dadurch gekennzeichnet, daß** die Schale (72) zwischen einer im wesentlichen horizontalen, ersten Stellung und einer zweiten, geneigten Stellung beweglich ist, um die Abgabe des Lebensmittels zu erleichtern, und daß die Tür (28) zwei Nockenprofile (73) aufweist, die im Eingriff mit der Schale (72) sind, wodurch diese aus ihrer ersten Stellung in die zweite Stellung geschwenkt wird, wenn die Tür (28) durch den Öffnungsmechanismus (50) geöffnet wird, wobei Federelemente (81) vorgesehen sind, die die Schale (72) in der zweiten Stellung halten.

10. Ofen nach einem der Ansprüche 4 bis 9, **dadurch gekennzeichnet, daß** der Elektromotor (42) durch eine Elektronikeinheit (71) gesteuert wird, die auch die Innentemperatur in dem Garraum (12) steuert und einen programmierbaren Zeitgeber (76) zur Steuerung der Abgabe des Lebensmittels hat, der so programmierbar ist, daß die Abgabe des Lebensmittels nach einer vorbestimmbaren Zeit nach der Einführung des Lebensmittels in den Garraum (12) erfolgt.

11. Ofen nach Anspruch 10, **dadurch gekennzeichnet, daß** das erste Schließorgan (22) ein Verriegelungselement (21) hat, das manuell und/oder automatisch über die Elektronikeinheit (71) betätigt und nur dann gelöst werden kann, wenn sich das Auswerferorgan (37) in der Beladeposition für das Lebensmittel befindet.

12. Vorrichtung zum Garen von Lebensmitteln wie Pizza oder dergleichen, **dadurch gekennzeichnet, daß** diese wenigstens zwei modulare Öfen (10) in Kastenform nach einem der vorhergehenden Ansprüche aufweist, die übereinander angeordnet sind.

## Revendications

1. Four pour la cuisson d'un produit alimentaire tel que pizza ou aliment similaire, comprenant au moins une chambre de cuisson (12) avec au moins une première ouverture (20), pouvant être close au moyen d'un premier élément de fermeture (22), à travers laquelle le produit alimentaire peut être introduit dans la chambre de cuisson (12), et avec au moins une seconde ouverture (26), pouvant être close au moyen d'un second élément de fermeture (28), à travers laquelle le produit alimentaire peut sortir, **caractérisé par le fait que** la chambre de cuisson (12) a sensiblement la forme d'une boîte présentant une paroi frontale (14), qui comprend la première ouverture (20), et au moins une paroi latérale (16a) faisant un angle droit avec la paroi frontale (14) et qui comprend la seconde ouverture (26), et **par le fait que** dans la chambre de cuisson (12) est prévu un organe d'expulsion automatique présentant un élément de poussée sous la forme d'une barre horizontale (37) sensiblement parallèle à la seconde ouverture (26) et apte à expulser automatiquement le produit alimentaire par la seconde ouverture (26), ladite barre (37) étant mobile de façon sensiblement orthogonale par rapport à la paroi latérale (16a) entre une position de chargement et une position de sortie du produit alimentaire.

2. Four selon la revendication 1, **caractérisé par le fait que** l'organe d'expulsion (37) se trouve, dans la position de chargement, au voisinage d'une autre paroi latérale (16b) opposée à la première paroi latérale (16a) de façon à ce que la première ouverture (20) reste libre, et **par le fait que** l'organe d'expulsion (37), dans la position de sortie, se trouve au voisinage de la première paroi latérale (16a).

3. Four selon la revendication 1 ou 2, **caractérisé par le fait que** l'organe d'expulsion (37) est relié à un système cinématique (30) logé dans la chambre de cuisson au voisinage d'une paroi postérieure (15) opposée à la paroi frontale (14).

4. Four selon la revendication 3, **caractérisé par le fait que** le système cinématique (30) comprend deux roues dentées (40, 44) sur lesquelles court une chaîne (46) portant l'organe d'expulsion (37), l'une des roues dentées (40) étant reliée à un moteur électrique (42).

5. Four selon la revendication 4, **caractérisé par le fait que** le moteur électrique (42) est bidirectionnel et que la chaîne (46) entraîne l'organe d'expulsion (47) de manière à ce que celui-ci se meuve sur un plan de cuisson (36) essentiellement horizontal de la chambre de cuisson (12) entre la position de chargement et la position de sortie et inversement.

6. Four selon la revendication 4 ou 5, **caractérisé par le fait qu'**une série d'ailettes (48), fixées aux maillons de la chaîne (46), coopèrent avec un mécanisme d'ouverture (50) du second élément de fermeture (28).

7. Four selon la revendication 6, **caractérisé par le fait que** le second élément de fermeture est une porte (28) et que le mécanisme d'ouverture (50) présente une barre (60) reliée à la porte (28) et apte à être manoeuvrée par les ailettes (48) pour ouvrir la porte (28) lorsque l'organe d'expulsion (37) se trouve dans la position précédant immédiatement l'expulsion du produit alimentaire hors de la chambre de cuisson (12).

8. Four selon la revendication 7, **caractérisé par le fait que**, au voisinage de la seconde ouverture (26) et en dehors de la première paroi latérale (16a), est prévu un plateau (72) apte à recevoir le produit alimentaire sortant de la chambre de cuisson (12).

9. Four selon la revendication 8, **caractérisé par le fait que** le plateau (72) est mobile entre une première position sensiblement horizontale et une seconde position inclinée pour faciliter la sortie du produit alimentaire et **par le fait que** la porte (28) présente deux profilés à came (73) en contact avec le plateau (72) de sorte que celui-ci soit pivoté de sa première position dans sa seconde position lorsque la porte (28) s'ouvre au moyen du mécanisme d'ouverture (50), deux éléments à ressort (81) maintenant le plateau (72) dans sa seconde position.

10. Four selon une quelconque des revendications 4 à 9, **caractérisé par le fait que** le moteur électrique (42) est commandé par une unité électronique (71) qui commande également la température interne dans la chambre de cuisson (12) et qui est pourvue d'un minuteur (76) pour commander la sortie du produit alimentaire et qui est programmable de telle sorte que le produit alimentaire soit expulsé de la chambre de cuisson (12) au bout d'un temps déterminé après l'introduction dans la chambre de cuisson (12).

11. Four selon la revendication 10, **caractérisé par le fait que** le premier élément de fermeture (22) est pourvu d'un élément de verrouillage (21) apte à être actionné manuellement et/ou automatiquement par l'unité électronique (71) et apte à être déverrouillé seulement quand l'organe d'expulsion (37) se trouve dans la position de chargement du produit alimentaire.

12. Dispositif pour la cuisson de produits alimentaires tels que pizza ou aliment similaire, **caractérisé par le fait qu'**au moins deux fours modulaires (10) en forme de boîte selon une quelconque des revendications précédentes sont disposés par étage.
